Europäisches Patentamt

European Patent Office

Office européen des brevets

(11) Veröffentlichungsnummer: **0 329 934**
**A2**

## (12) EUROPÄISCHE PATENTANMELDUNG

(21) Anmeldenummer: 89100555.5

(22) Anmeldetag: 13.01.89

(51) Int. Cl.4: **B29C 47/60** , **B29C 47/64**

(30) Priorität: 26.02.88 DE 3806020

(43) Veröffentlichungstag der Anmeldung:
30.08.89 Patentblatt 89/35

(84) Benannte Vertragsstaaten:
CH DE FR GB LI

(71) Anmelder: AEG KABEL Aktiengesellschaft
Bonnenbroicher Strasse 2-14
D-4050 Mönchengladbach 2(DE)

(72) Erfinder: Esser, Josef, Dipl.-Ing.
Bylandstrasse 26
D-4050 Mönchengladbach 2(DE)
Erfinder: Heiden, Dieter, Dipl.-Ing.
Adlerstrasse 38
D-4030 Ratingen 8(DE)

(74) Vertreter: Langer, Karl-Heinz, Dipl.-Ing.
Licentia Patent-Verwaltungs-GmbH
Theodor-Stern-Kai 1
D-6000 Frankfurt/Main 70(DE)

(54) Extruder.

(57) Bei einem Extruder mit einer Extruderschnecke
besteht die Schnecke aus unterschiedlichen Teilen,
die unabhängig voneinander rotierbar sind.

EP 0 329 934 A2

## Extruder

Extruder haben bekanntlich die Aufgabe, Material aufzuschmelzen, zu homogenisieren und in eine bestimmte Form zu bringen. Die Extrudertechnik findet beispielsweise bei der Herstellung von Rohren, Kabeln, Folien oder Formartikeln Anwendung.

Extruder haben bekanntlich eine Extruderschnecke, die mit einer bestimmten Drehzahl (Geschwindigkeit) angetrieben wird. Der Erfindung liegt die Aufgabe zugrunde, einen Extruder anzugeben, der die an einen Extruder zu stellenden Aufgaben wie Aufschmelzen, Fördern, Druck erzeugen, Homogenisieren besser löst als ein bekannter Extruder. Diese Aufgabe wird gemäß der Erfindung durch einen Extruder mit den kennzeichnenden Merkmalen des Anspruchs 1 gelöst.

Die Erfindung wird im folgenden an einem Ausführungsbeispiel erläutert.

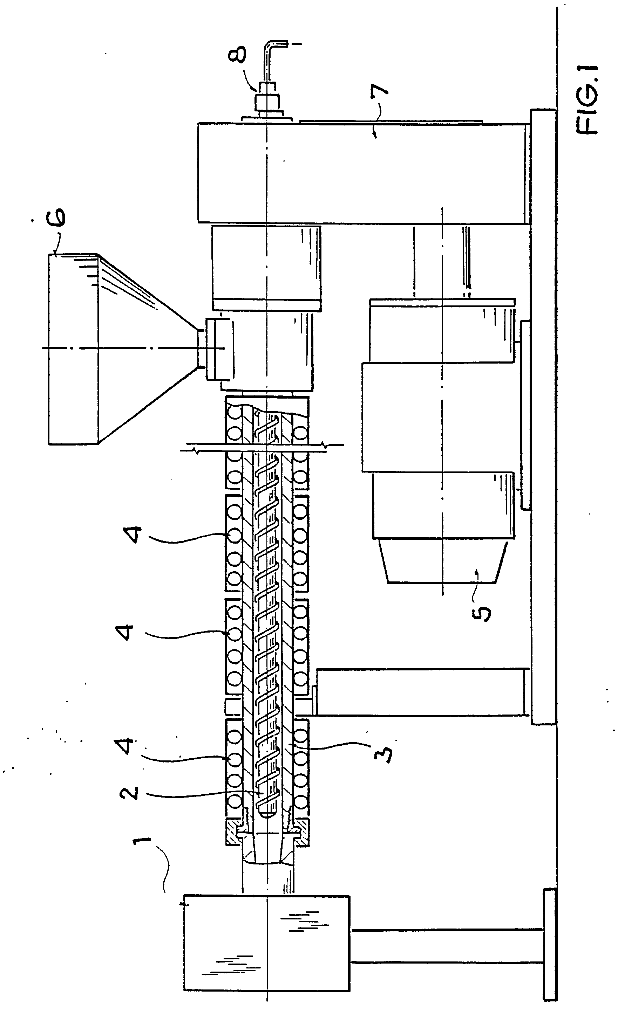

Die Figur 1 zeigt das Beispiel eines bekannten Extruders. Der bekannte Extruder der Figur 1 weist einen Spritzkopf 1, eine Extruderschnecke 2, einen Extruderzylinder 3, eine Extruderheizung 4, einen Motor 5 sowie einen Trichter 6 (für Granulat) auf. Im Betrieb wird dem Extruder z.B. Kunststoffgranulat über den Trichter 6 zugeführt. Das Granulat gelangt zur Extruderschnecke 2 und wird zwischen der Extruderschnecke 2 und dem Extruderzylinder 3 in Richtung Spritzkopf 1 gefördert. Durch die Behei zung 4 des Extruderzylinders 3 wird das Granulat aufgeschmolzen. Bei der Förderung in Richtung Spritzkopf wird das Material homogenisiert und temperiert. Dabei erfährt die Materialschmelze einen Druckaufbau, der entlang der Extruderschnecke in Richtung Spritzkopf erfolgt. Im Spritzkopf erfolgt die Formgebung der Schmelze. Die Extruderschnecke 2 ist im allgemeinen hohl. Der Hohlraum kann über eine drehende Durchführung 8 mit Temperiermedium versorgt werden.

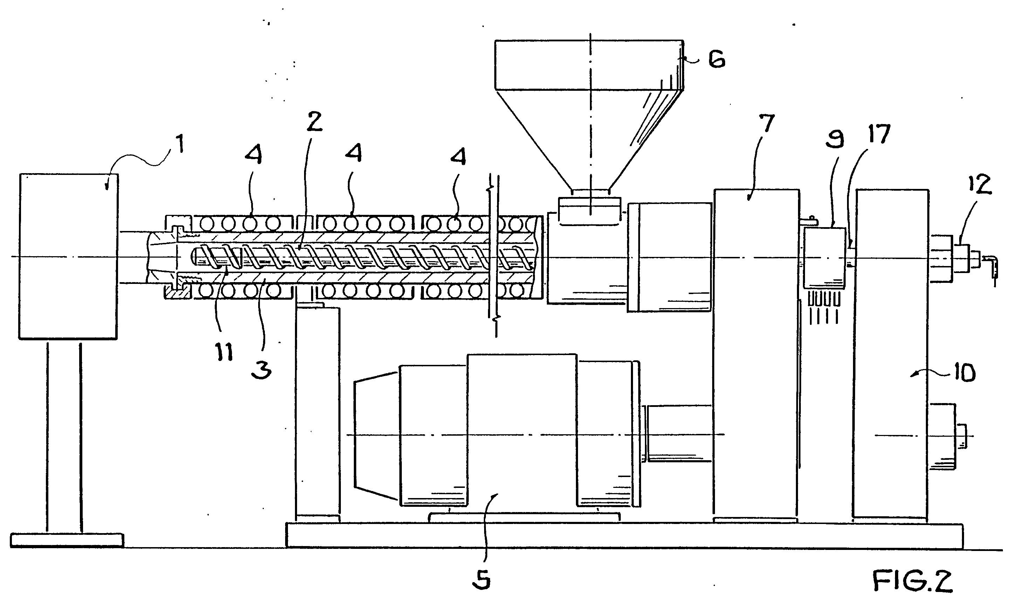

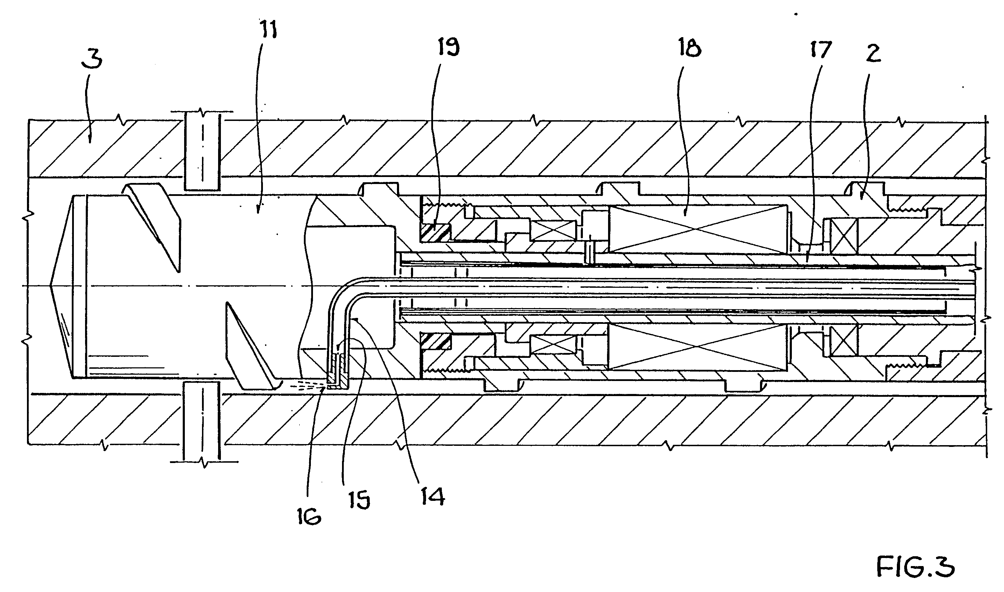

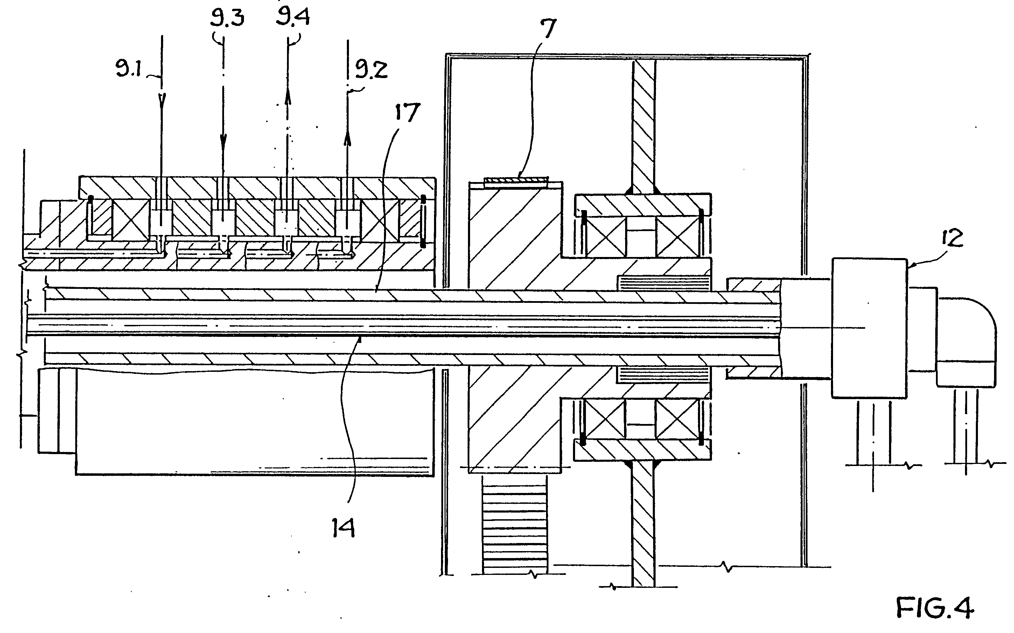

Die Figuren 2 bis 4 zeigen eine Extruderschnecke nach der Erfindung. Gemäß der Erfindung besteht die Extruderschnecke des Extruders der Figuren 2 bis 4 aus zwei Teilen 11 und 2. Der hintere Schneckenteil 2 wird von einem Antrieb 5 über ein Getriebe 7 gedreht. Der vordere Schneckenteil 11 wird durch eine Welle 17 angetrieben, die durch das hohle hintere Schneckenteil 2 führt und das vordere Schneckenteil 11 mit dem Antrieb 10 verbindet. Auf diese weise können die beiden Schneckenteile 2 und 11 unabhängig voneinander angetrieben werden.

Die Drehzahl des hinteren Schneckenteiles bestimmt im Ausführungsbeispiel die Durchsatzmenge. Unabhängig davon bestimmt die Drehzahl des vorderen Schneckenteiles die Homogenisierung der Schmelze und die homogene Einmischung einen Agens in die Schmelze. Der Extruder nach der Erfindung (Figuren 2 bis 4) ermöglicht eine hohe Durchsatzmenge bei zeitlicher Konstanz durch das hintere Schnekkenteil und sorgt für eine gute Homogenisierung der Schmelze sowie einen guten Mischeffekt durch das vordere Schneckenteil.

Die Lagerung des vorderen Schneckenteiles im hinteren Schneckenteil erfolgt im wesentlichen mit einem Tandem- Axiallager 18. Die Abdichtung zwischen den Schneckenteilen erfolgt durch eine Dichtung 19.

Beim Extruder nach der Erfindung ist eine Vierfach-Drehdurchführung 9 vorgesehen. Der Einlaß 9.3 dient zur Zufuhr des Temperiermediums für den hinteren Schneckenteil. Der Auslaß 9.4 dient zur Abfuhr des Temperiermediums für den hinteren Schneckenteil. Der Einlaß 9.1 dient zur Zufuhr des Schmiermittels für das Tandem-Axiallager 18. Der Auslaß 9.2 dient zur Abfuhr des Schmiermittels für das Tandem-Axiallager 18.

Ober die Drehdurchführung 12 und ein Zuführungsrohr 14 wird ein Agens in den vorderen Schneckenteil 11 eingebracht. Das Agens wird über entsprechende Kanäle 15 zu Düsen 16 geführt, die in den Schmelzstrom hineinragen, so daß das Agens in die Mitte des Schmelzstromes eingespritzt werden kann.

Das vordere Schneckenteil ist als Mischteil ausgeführt und bewirkt eine besonders homogene Durchmischung des Agens mit der Schmelze.

## Ansprüche

1) Extruder mit einer Extruderschnecke dadurch gekennzeichnet, daß die Schnecke aus unterschiedlichen Teilen besteht, die unabhängig voneinander rotierbar sind.

2) Extruder nach Anspruch 1, dadurch gekennzeichnet, daß einer der unterschiedlich voneinander rotierbaren Teile der Schneckenkopf ist.

3) Extruder nach Anspruch 1 oder 2, dadurch gekennzeichnet, daß die Schnecke hohl ausgebildet ist und daß eine Antriebswelle vorgesehen ist, die in der hohlen Schnecke verläuft und zumindest einen der unterschiedlich rotierbaren Teile antreibt.

FIG.1

EP 0 329 934 A2

FIG.2

EP 0 329 934 A2

FIG.3

EP 0 329 934 A2

FIG.4

EP 0 329 934 A2